(19)

**Europäisches Patentamt**
**European Patent Office**
**Office européen des brevets**

(11) **EP 4 760 895 A1**

(12) **EUROPEAN PATENT APPLICATION**
published in accordance with Art. 153(4) EPC

(43) Date of publication:
**17.06.2026 Bulletin 2026/25**

(21) Application number: **24852293.0**

(22) Date of filing: **06.08.2024**

(51) International Patent Classification (IPC):
*H01M 50/131* (2021.01)    *H01M 50/105* (2021.01)
*H01M 50/126* (2021.01)    *H01M 50/116* (2021.01)
*H01M 10/052* (2010.01)

(52) Cooperative Patent Classification (CPC):
**H01M 10/052; H01M 50/105; H01M 50/116;**
**H01M 50/126; H01M 50/131; Y02E 60/10**

(86) International application number:
**PCT/KR2024/011613**

(87) International publication number:
**WO 2025/033939 (13.02.2025 Gazette 2025/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.08.2023 KR 20230104133**

(71) Applicant: **Youlchon Chemical Co., Ltd.**
**Seoul 07057 (KR)**

(72) Inventors:
• **SONG, Nok Jung**
  **Seoul 07057 (KR)**

• **HAN, Hee Sik**
  **Ansan-si, Gyeonggi-do 15430 (KR)**
• **JANG, Jee Eun**
  **Ansan-si, Gyeonggi-do 15430 (KR)**
• **KIM, Yoo Han**
  **Ansan-si, Gyeonggi-do 15430 (KR)**
• **KIM, Hui Hun**
  **Ansan-si, Gyeonggi-do 15430 (KR)**
• **SHIN, Sung Chul**
  **Ansan-si, Gyeonggi-do 15430 (KR)**

(74) Representative: **Meissner Bolte Partnerschaft**
**mbB**
**Patentanwälte Rechtsanwälte**
**Postfach 86 06 24**
**81633 München (DE)**

(54) **POUCH FILM FOR SECONDARY BATTERY EXTERIOR AND SECONDARY BATTERY COMPRISING SAME**

(57)    The present disclosure provides a pouch film for a secondary battery exterior, the pouch film comprising an outer layer, a barrier layer, and a sealant layer that are sequentially laminated, wherein the sealant layer comprises a polyolefin-based resin, an upper yield strength of the sealant layer in an MD direction is in a range of 17.50 N/mm$^2$ to 19.99 N/mm$^2$, an upper yield strength thereof in a TD direction is in a range of 16.50 N/mm$^2$ to 18.99 N/mm$^2$, and a glass transition temperature of the sealant layer is in a range of -30.00°C to -20.00°C.

EP 4 760 895 A1

# Figure 1

**Description**

[Technical Field]

CROSS-REFERENCE TO RELATED APPLICATIONS

This application claims priority under 35 U.S.C. § 119 to Korean Patent Application No. 10-2023-0104133 filed on August 9, 2025, in the Korean Intellectual Property Office, the disclosures of which are incorporated by reference herein in their entireties.

Technical field

The present disclosure relates to a pouch film for a secondary battery exterior and a secondary battery comprising the same.

[Background Art]

A secondary battery may be repeatedly charged and discharged and may be classified into a cylindrical secondary battery, a prismatic secondary battery, a pouch type secondary battery, and the like according to a structure and a manufacturing method thereof. Among them, the pouch-type secondary battery comprises a battery body (e.g., an electrode, a separator, and/or an electrolyte) and a pouch film for encapsulating the battery body, has a relatively simple structure and a relatively large capacity per unit volume, and thus is widely used in an energy storage device such as a vehicle battery.

In general, a method of bringing innermost layers (e.g., sealant layers) of the pouch film into contact with each other, then applying heat and a pressure the innermost layers in contact with each other, thermally bonding the innermost layers, forming a sealing portion, and thus sealing the battery body is used as a method of encapsulating the battery body with the pouch film. In this way, the battery body sealed by the pouch film may not be substantially exposed to an external environment.

Meanwhile, to prevent the battery body from being exposed to the external environment, the pouch film is required to have excellent sealing properties, and in particular, is required to have excellent retention of sealing properties under various environmental conditions. This is because, when the battery body is exposed to the external environment, a function of the pouch type secondary battery may be degraded or the pouch type secondary battery may be exploded.

Here, the sealing properties of the pouch film and retention characteristics thereof may be evaluated by a sealing strength of the pouch film. The sealing strength is an indicator representing excellence of a thermal bonding strength at the sealing portion of the pouch film, and when the sealing strength of the pouch film is excellent, it may be seen that the sealing properties of the pouch film are generally excellent.

Meanwhile, in the related art, it is difficult for the pouch film to secure a sufficient thermal bonding strength at the sealing portion, and studies for improving the thermal bonding strength at the sealing portion have also been insufficient. Thus, in the pouch film according to the related art, it is difficult to secure a sufficient sealing strength, and a problem in which a thermally bonded sealing portion is vented has frequently occurred.

[Disclosure]

[Technical Problem]

A pouch film capable of exhibiting overall excellent sealing strength characteristics by securing sufficient thermal bonding strength at a sealing portion of the pouch film and a pouch film capable of exhibiting excellent sealing properties derived from the above-described excellent sealing strength characteristics and sealing retention characteristics under various environmental conditions (e.g., a relatively high temperature and/or an external impact) are further required.

[Technical Solution]

To solve the above-described problems, the present disclosure provides a pouch film for a secondary battery exterior, the pouch film comprising an outer layer, a barrier layer, and a sealant layer that are sequentially laminated, wherein the sealant layer comprises a polyolefin-based resin, an upper yield strength of the sealant layer in an MD direction is in a range of 17.50 N/mm$^2$ to 19.99 N/mm$^2$, an upper yield strength thereof in a TD direction is in a range of 16.50 N/mm$^2$ to 18.99 N/mm$^2$, and a glass transition temperature of the sealant layer is in a range of -30.00°C to -20.00°C.

Further, to solve the above-described problems, the present disclosure also provides a lithium secondary battery encapsulated with the pouch film for a secondary battery exterior.

[Advantageous Effects]

According to the present disclosure, by applying a sealant layer having an upper yield strength and a glass transition temperature within the above-described numerical ranges, thermal bonding strength of the sealant layer may be improved, and accordingly, a pouch film for a secondary battery exterior may have excellent sealing strength characteristics and excellent sealing properties derived therefrom as well as sealing retention characteristics under various environmental conditions.

[Description of Drawings]

FIG. 1 is a view for describing a method of measuring a room-temperature sealing strength of a pouch film for a secondary battery exterior of the present disclosure according to a measurement condition "A."
FIG. 2 is a view for describing a method of measuring a high-temperature sealing strength of the pouch film for a secondary battery exterior of the present disclosure according to a measurement condition "B."

[Mode for Invention]

The present disclosure relates to a pouch film for a secondary battery exterior, comprising an outer layer, a barrier layer, and a sealant layer that are sequentially laminated, and a lithium secondary battery encapsulated with the pouch film for a secondary battery exterior.

## Outer Layer

The outer layer may be an outermost layer of the pouch film for a secondary battery exterior and may comprise a heat-resistant resin layer having a melting point greater than a thermal bonding temperature of the sealant layer, which will be described below. A type of the heat-resistant resin layer is not particularly limited, but the heat-resistant resin layer may comprise at least one selected from the group consisting of polyamide, polyester, polyolefin, a copolymer thereof, and a blend thereof. Here, the outer layer may have a single-layer or multi-layer structure comprising at least one of the above-described materials.
The outer layer may have an appropriate thickness within a range capable of securing sufficient mechanical strength and sufficient formability as an exterior material. For example, a thickness of the outer layer may be appropriately selected from a range of 15 $\mu$m to 140 $\mu$m, a range of 25 $\mu$m to 110 $\mu$m, or a range of 35 $\mu$m to 100 $\mu$m.

## Barrier Layer

The barrier layer may be an intermediate layer (e.g., a layer disposed between the outer layer and the sealant layer) of the pouch film for a secondary battery exterior and may serve to block intrusion of gas and/or moisture and to impart a mechanical strength having a certain level or more to the pouch film for a secondary battery exterior. A type of the barrier layer is not particularly limited, but the barrier layer may comprise at least one selected from the group consisting of aluminum, stainless steel, copper, titanium, and alloys thereof and may preferably comprise aluminum.
The barrier layer may have an appropriate thickness within a range capable of effectively blocking the intrusion of the gas and/or moisture while securing sufficient formability. For example, a thickness of the barrier layer may be appropriately selected from a range of 20 $\mu$m to 150 $\mu$m, a range of 55 $\mu$m to 125 $\mu$m, or a range of 60 $\mu$m to 90 $\mu$m.

## Sealant Layer

The sealant layer may be an innermost layer of the pouch film for a secondary battery exterior. That is, the sealant layer may be in direct contact with a battery body (e.g., an electrode, a separator, and/or an electrolyte). Thus, the sealant layer should have excellent electrolyte resistance and excellent insulating properties.
To this end, the sealant layer may comprise at least a polyolefin-based resin. The polyolefin-based resin may have excellent electrolyte resistance and excellent insulating properties, and accordingly, the sealant layer comprising the polyolefin-based resin may also have excellent electrolyte resistance and excellent insulating properties derived from the polyolefin-based resin.
The polyolefin-based resin may comprise, for example, a polyolefin derived from an olefin or a derivative thereof, a copolymer thereof, or a blend comprising at least one of them. For example, the polyolefin-based resin layer may comprise at least one selected from the group consisting of polyethylene, polypropylene, polybutylene, a copolymer derived from a monomer derived from ethylene and/or propylene and a monomer derived from an alpha-olefin, and a blend thereof.

The sealant layer may form a sealing portion by thermal bonding (e.g., applying heat and a pressure to the sealant layers in contact with each other to bond the sealant layers). Accordingly, using this, the battery body may be sealed by thermally bonding the sealant layer of the pouch film for a secondary battery exterior to form the sealing portion.

Here, when an upper yield strength of the sealant layer comprising the polyolefin-based resin in an MD direction is in a range of 17.50 $N/mm^2$ to 19.99 $N/mm^2$, a range of 17.70 $N/mm^2$ to 19.50 $N/mm^2$, a range of 18.00 $N/mm^2$ to 19.20 $N/mm^2$, preferably a range of 18.20 $N/mm^2$ to 18.89 $N/mm^2$, and an upper yield strength thereof in a TD direction is in a range of 16.50 $N/mm^2$ to 18.99 $N/mm^2$, a range of 16.75 $N/mm^2$ to 18.55 $N/mm^2$, a range of 17.00 $N/mm^2$ to 17.99 $N/mm^2$, preferably, a range of 17.10 $N/mm^2$ to 17.70 $N/mm^2$, and a glass transition temperature is in a range of -30.00 °C to -20.00 °C, a range of -27.00 °C to -20.50 °C, a range of -24.00 °C to -20.99 °C, preferably a range of -22.99 °C to -21.10 °C, the inventors of the present disclosure have found that the sealant layer has excellent thermal bonding strength, the pouch film for a secondary battery exterior comprising the sealant layer may exhibit excellent sealing strength characteristics, and accordingly, the pouch film for a secondary battery exterior may have excellent sealing properties and retention characteristics thereof.

This is because the upper yield strength and the glass transition temperature of the sealant layer comprising the polyolefin-based resin are closely associated with thermal bonding strength characteristics of the sealing portion and sealing strength characteristics of the pouch film for a secondary battery exterior derived therefrom.

Meanwhile, the upper yield strength and the glass transition temperature of the sealant layer may be adjusted by adjusting, for example, characteristics such as a type and softness of the polyolefin-based resin comprised in the sealant layer, whether the sealant layer is stretched or unstretched, addition of various widely known elastomer-based additives (e.g., a polyester-based elastomer, a polyamide-based elastomer, a polyurethane-based elastomer, a polyolefin-based elastomer, a polystyrene-based elastomer, a polyester elastomer, an acryl-based elastomer, copolymers thereof, or blends thereof), contents of the additives added, and a crystallization calorie and a crystallization temperature of the sealant layer. By way of example, when a content of the elastomer-based additive is increased, the glass transition temperature, the crystallization calorie, and the crystallization temperature may be affected and decreased, and thus it is important to adjust optimum ranges of the glass transition temperature and the crystallization calorie in consideration thereof. When the glass transition temperature is low, high-temperature sealing strength is reduced, and when the crystallization calorie is high, a strain rate is decreased, and thus a whitening phenomenon due to bending characteristics may occur. Accordingly, the present disclosure may provide the pouch film having excellent sealing strength and high-temperature sealing properties by configuring the content of the elastomer-based additive for each layer and appropriately adjusting the entire glass transition temperature, the entire crystallization calorie, and the entire crystallization temperature. By way of example, to satisfy ranges of the upper yield strength and the glass transition temperature of the sealant layer, the crystallization calorie and the crystallization temperature of the sealant layer may be adjusted. The crystallization calorie may be adjusted to a range of 14 J/g to 20 J/g, and the crystallization temperature may be adjusted to a range of 101.0 °C to 103.0 °C.

Here, when the sealant layer comprises the polyolefin-based resin, as long as the upper yield strength in the MD direction, the upper yield strength in the TD direction, and the glass transition temperature of the sealant layer satisfy the above-described numerical ranges, a type and a content of the polyolefin-based resin, whether the elastomer-based additive is added, a type and a content of the elastomer-based additive added, and characteristics of the polyolefin-based resin are not particularly limited.

Further, as long as the upper yield strength in the MD direction, the upper yield strength in the TD direction, and the glass transition temperature of the sealant layer satisfy the above-described numerical ranges, the sealant layer may have a single-layer structure or may have a multi-layer structure comprising the same material or different materials.

For example, the sealant layer may have a single-layer structure or a laminated structure of two or more layers formed by coextrusion or the like, and this sealant layer may adhere to the barrier layer through an adhesive layer provided on one surface of the barrier layer. Here, the adhesive layer may be obtained by drying a solvent-type adhesive, and in this case, a method of adhering the sealant layer to the barrier layer by drying this solvent-type adhesive may be referred to as a solvent dry lamination method.

As another example, the sealant layer may be disposed on the barrier layer without a separate adhesive layer and may comprise a first sealant layer disposed on the barrier layer from an opposite side to the outer layer and a second sealant layer disposed on the first sealant layer. In this case, the pouch film for a secondary battery exterior may comprise the second sealant layer, the first sealant layer, the barrier layer, and the outer layer in order from an innermost layer to an outermost layer thereof.

Here, the first sealant layer may be an extrusion coating layer obtained by extrusion-coating the polyolefin-based resin, and the second sealant layer may be a film layer comprising a polyolefin-based resin that is the same as or different from the resin comprised in the first sealant layer and may adhere to the barrier layer by the first sealant layer that is the extrusion coating layer. In the sealant layer comprising the film layer and the extrusion coating layer, a method of adhering the film layer to the barrier layer by the extrusion coating layer may be referred to as an extrusion lamination method.

In an embodiment, when the sealant layer comprises the first sealant layer and the second sealant layer formed by the above-described extrusion lamination method, the second sealant layer that is the innermost layer may comprise a polypropylene-based resin, preferably a cast polypropylene (CPP) film, and the first sealant layer may comprise the polyolefin-based resin extrusion-coated on the barrier layer, preferably a polypropylene-based resin extrusion-coated on the barrier layer. Here, when the first sealant layer and the second sealant layer comprise the above-described materials, the upper yield strength and the glass transition temperature of the sealant layer may be more easily adjusted, the first sealant layer may provide an excellent adhesive force, and thermal adhesion strength at the sealing portion formed by thermal adhesion of the second sealant layer that is the innermost layer may be very excellent.

In the embodiment, when the sealant layer comprises the first sealant layer and the second sealant layer formed by the above-described extrusion lamination method, a ratio of a thickness of the second sealant layer to a sum of a thickness of the first sealant layer and the thickness of the second sealant layer may be in a range of 1:0.5 to 1:0.99, a range of 1:0.55 to 1:0.90, a range of 1:0.57 to 1:0.79, or a range of 1:0.60 to 1:0.72. Here, when the thickness ratio satisfies the above-described numerical ranges, an adhesive force with the barrier layer may be sufficiently secured, and further, the upper yield strength and the glass transition temperature of the sealant layer may be more easily adjusted.

Pouch Film for Secondary Battery Exterior

The pouch film for a secondary battery exterior according to the present disclosure comprises the outer layer as the outermost layer, the barrier layer as the intermediate layer, and the sealant layer as the innermost layer.

The pouch film for a secondary battery exterior may be used to seal the battery body. For example, the battery body may be sealed by bringing the sealant layers of two different pouch films for secondary battery exteriors into contact with each other and then thermally bonding the sealant layers to form the sealing portion. As another example, the battery body may be sealed by folding the single pouch film for a secondary battery exterior in half, bringing the sealant layers into contact with each other, then thermally bonding the sealant layers in contact with each other, and forming the sealing portion.

The pouch film for a secondary battery exterior comprising the sealing portion formed by thermally bonding the sealant layer may have excellent sealing strength characteristics and may have excellent sealing properties and retention characteristics derived therefrom.

Here, room-temperature sealing strength measured for the pouch film for a secondary battery exterior under a measurement condition "A" which will be described below may be used as a criterion for evaluating sealing strength characteristics of the pouch film for a secondary battery exterior. The room-temperature sealing strength measured under the measurement condition "A" may be obtained by comprehensively evaluating thermal bonding strength at the sealing portion of the pouch film for a secondary battery exterior through a tensile test at room temperature and may serve as an indicator that comprehensively represents room-temperature sealing strength characteristics.

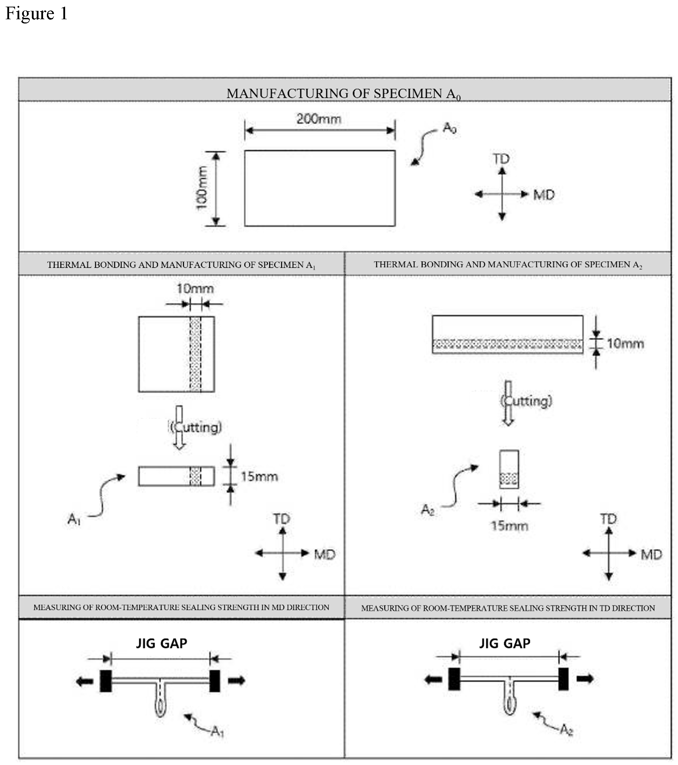

Hereinafter, the measurement condition "A" will be described with reference to FIG. 1.

Referring to FIG. 1, a specimen $A_0$ having a length of 100 mm in the TD direction and a length of 200 mm in the MD direction may be manufactured from the pouch film for a secondary battery exterior.

Thereafter, after the specimen $A_0$ may be folded in half so that the length in the MD direction is halved, the sealant layers in contact with each other may be thermally bonded (at a temperature of 220 °C, a pressure of 0.2 MPa, a time of 2.0 seconds, and a length of 10 mm of the sealing portion in the MD direction), the thermally bonded specimen $A_0$ may be cut, and thus a specimen $A_1$ having a length of 15 mm in the TD direction may be manufactured.

Meanwhile, separately from this, after the specimen $A_0$ may be folded in half so that the length in the TD direction is halved, the sealant layers in contact with each other may be thermally bonded (at a temperature of 220 °C, a pressure of 0.2 MPa, a time of 2.0 seconds, and a length of 10 mm of the sealing portion in the TD direction), the thermally bonded specimen $A_0$ may be cut, and thus a specimen $A_2$ having a length of 15 mm in the MD direction may be manufactured.

Here, a graph $G_1$ of dependence of a jig gap change of the room-temperature sealing strength in the MD direction may be obtained while the specimen $A_1$ is pulled at a measurement temperature of 25 °C and a measurement speed of 50 mm/min after the specimen $A_1$ is fixed between two jigs of a tensile testing machine UTM (AGS-X manufactured by SHIMADZU) (with an initial jig gap of 30 mm) so that the sealing portion of the specimen $A_1$ is positioned at a center.

Further, a graph $G_2$ of dependence of a jig gap change of the room-temperature sealing strength in the TD direction may be obtained while the specimen $A_2$ is pulled at a measurement temperature of 25 °C and a measurement speed of 50 mm/min after the specimen $A_2$ is fixed between the two jigs of the tensile testing machine UTM (AGS-X manufactured by SHIMADZU) (with an initial jig gap of 30 mm) so that the sealing portion of the specimen $A_2$ is positioned at a center.

In the embodiment, a maximum value of the room-temperature sealing strength of the pouch film for a secondary battery exterior in the MD direction measured under the measurement condition "A" may be in a range of 165 N to 240 N, and a maximum value of the room-temperature sealing strength thereof in the TD direction may be in a range of 160 N to 230 N. Here, the maximum value of the room-temperature sealing strength in the MD direction may be measured from the maximum value of the graph $G_1$, and the maximum value of the room-temperature sealing strength in the TD direction may be measured from the maximum value of the graph $G_2$. When the maximum value of the room-temperature sealing strength in the MD direction and the maximum value of the room-temperature sealing strength in the TD direction satisfy the above-described numerical ranges, the pouch film for a secondary battery exterior according to the present disclosure may have excellent sealing strength under room temperature conditions and excellent sealing properties derived therefrom.

In the embodiment, in the graph $G_2$, a room-temperature maximum stroke in the TD direction defined as the jig gap change corresponding to the maximum value of the room-temperature sealing strength in the TD direction may be in a range of 13 mm to 30mm. Further, an integral value obtained by integrating the graph $G_2$ in a range of 0 mm to the room-temperature maximum stroke in the TD direction may be in a range of 2,200 N·mm to 3,500 N·mm. Here, the integral value is expressed as a product of a force (e.g., the sealing strength) and a distance (e.g., the jig gap change) and thus may be referred to as room-temperature sealing energy. When the room-temperature maximum stroke in the TD direction and the room-temperature sealing energy satisfy the above-described numerical ranges, the pouch film for a secondary battery exterior according to the present disclosure may have excellent sealing strength retention under room-temperature conditions and excellent sealing retention characteristics derived therefrom.

In the embodiment, the maximum value of the room-temperature sealing strength in the TD direction may be in a range of 90% to 110% of the maximum value of the room-temperature sealing strength in the MD direction. When the maximum value of the room temperature sealing strength in the TD direction satisfies the above-described numerical range, the pouch film for a secondary battery exterior may entirely exhibit excellent sealing properties under room-temperature conditions regardless of a forming direction.

Meanwhile, high-temperature sealing strength measured for the pouch film for a secondary battery exterior under a measurement condition "B" which will be described below may be used as another criterion for evaluating sealing strength characteristics of the pouch film for a secondary battery exterior. The high-temperature sealing strength measured under the measurement condition "B" may be obtained by comprehensively evaluating thermal bonding strength at the sealing portion of the pouch film for a secondary battery exterior through a tensile test after the pouch film for a secondary battery exterior is left at a temperature of 60 °C and may be an indicator comprehensively representing sealing strength characteristics after the pouch film for a secondary battery exterior is left in a high temperature.

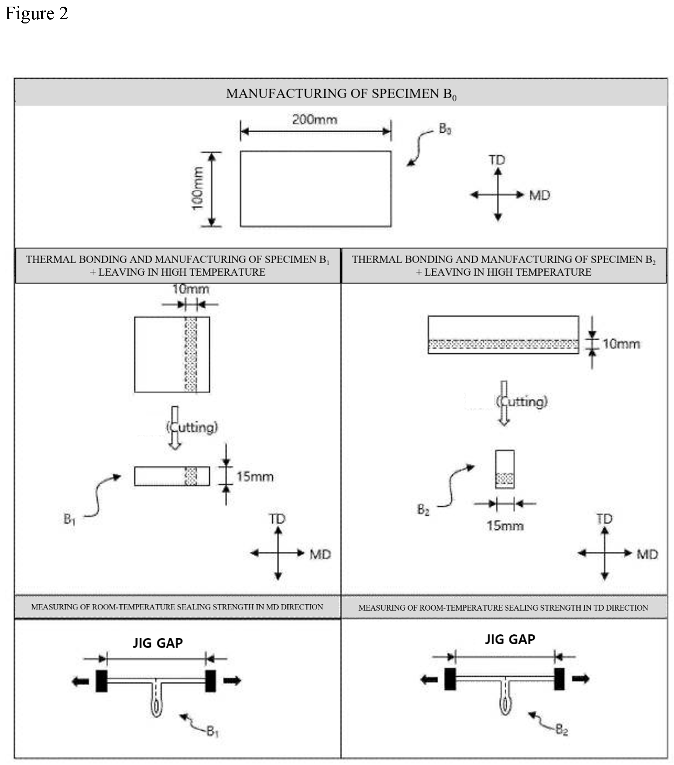

Hereinafter, the measurement condition "B" will be described with reference to FIG. 2.

Referring to FIG. 2, a specimen $B_0$ having a length of 100 mm in the TD direction and a length of 200 mm in the MD direction may be manufactured from the pouch film for a secondary battery exterior.

Thereafter, after the specimen $B_0$ may be folded in half such that a length thereof in the MD direction is halved, the sealant layers in contact with each other may be thermally bonded (at a temperature of 220 °C, a pressure of 0.2 MPa, a time of 2.0 seconds, and a length of 10 mm of the sealing portion in the MD direction), a specimen $B_1$ having a length of 15 mm in the TD direction may be manufactured by cutting the thermally bonded specimen $B_0$, and the manufactured specimen $B_1$ may be left at a temperature of 60 °C for 3 minutes.

Meanwhile, separately from this, after the specimen $B_0$ may be folded in half so that a length thereof in the TD direction is halved, the sealant layers in contact with each other may be thermally bonded (at a temperature of 220 °C, a pressure of 0.2 MPa, a time of 2.0 seconds, and a length of 10 mm of the sealing portion in the TD direction), a specimen $B_2$ having a length of 15 mm in the MD direction may be manufactured by cutting the thermally bonded specimen $B_0$, and the manufactured specimen $B_2$ may be left at a temperature of 60 °C for 3 minutes.

Here, a graph $G_1'$ of dependence of a jig gap change of the high-temperature sealing strength in the MD direction may be obtained while the specimen $B_1$ is pulled at a measurement temperature of 25 °C and a measurement speed of 50 mm/min after the specimen $B_1$ is fixed between two jigs of the tensile testing machine UTM (AGS-X manufactured by SHIMADZU) (with an initial jig gap of 30 mm) so that the sealing portion of the specimen $B_1$ is positioned at a center.

Further, after the specimen $B_2$ is fixed between the two jigs of the tensile testing machine UTM (AGS-X manufactured by SHIMADZU) with an initial jig gap of 30 mm so that the sealing portion of the specimen $B_2$ is positioned at a center, while the specimen $B_2$ is pulled at a measurement temperature of 25 °C and a measurement speed of 50 mm/min, a graph $G_2'$ of dependence of a jig gap change of the high-temperature sealing strength in the TD direction may be obtained.

In the embodiment, a maximum value of the high-temperature sealing strength of the pouch film for a secondary battery exterior in the MD direction measured under the measurement condition "B" may be in a range of 150 N to 200 N, and a maximum value of the high-temperature sealing strength thereof in the TD direction may be in a range of 145 N to 195 N. Here, the maximum value of the high-temperature sealing strength in the MD direction may be measured from the maximum value of the graph $G_1'$, and the maximum value of the high-temperature sealing strength in the TD direction may be measured from the maximum value of the graph $G_2'$. When the maximum value of the high-temperature sealing strength in the MD direction and the maximum value of the high-temperature sealing strength in the TD direction satisfy the above-described numerical ranges, the pouch film for a secondary battery exterior according to the present disclosure may have excellent sealing strength and excellent sealing properties derived therefrom even when the pouch film is exposed to a high-temperature environment.

In the embodiment, in the graph $G_2$', a high-temperature maximum stroke in the TD direction defined as the jig gap change corresponding to the maximum value of the high-temperature sealing strength in the TD direction may be in a range of 15 mm to 25mm. Further, an integral value obtained by integrating the graph $G_2$' in a range of 0 mm to the high-temperature maximum stroke in the TD direction may be in a range of 2,200 N·mm to 3,500 N·mm. Here, the integral value is expressed as a product of a force (e.g., the sealing strength) and a distance (e.g., the jig gap change) and thus may be referred to as high-temperature sealing energy. When the high-temperature maximum stroke in the TD direction and the high-temperature sealing energy satisfy the above-described numerical ranges, the pouch film for a secondary battery exterior according to the present disclosure may have excellent sealing strength retention and excellent sealing retention characteristics derived therefrom even when the pouch film is exposed to a high-temperature environment.

In the embodiment, the maximum value of the high-temperature sealing strength in the TD direction may be in a range of 95% to 105% of the maximum value of the high-temperature sealing strength in the MD direction. Here, when the maximum value of the high-temperature sealing strength in the TD direction satisfies the above-described numerical range, the pouch film for a secondary battery exterior according to the present disclosure may entirely exhibit excellent sealing properties even when the pouch film is exposed to the high-temperature environment regardless of a forming direction.

In the embodiment, a difference between the room-temperature sealing energy and the high-temperature sealing energy may be 590 N·mm or less, 530 N·mm or less, and preferably 410 N·mm or less. When the difference between the room-temperature sealing energy and the high-temperature sealing energy satisfies the above-described numerical range, the pouch film for a secondary battery exterior has excellent high temperature resistance.

In the embodiment, a parameter "P" related to a sealing strength reduction rate at a high temperature compared to a room temperature, represented by Equation 1, may be 1.5 or less. The parameter "P" is an indicator representing how much the maximum value of the high-temperature sealing strength measured under the measurement condition "B" is reduced compared to the maximum value of the room-temperature sealing strength measured under the measurement condition "A" and means that, as a value thereof becomes smaller, the sealing strength reduction rate may become smaller even when the pouch film is exposed to a high temperature. When the parameter "P" satisfies the above-described numerical range, it may be seen that the pouch film for a secondary battery exterior has excellent high-temperature resistance.

[Equation 1]

$$P = \frac{(maximum\ value\ of\ room\ temperature\ sealing\ strength\ in\ MD\ direction) \times (maximum\ value\ of\ room\ temperature\ sealing\ strength\ in\ TD\ direction)}{(maximum\ value\ of\ high\ temperature\ sealing\ strength\ in\ MD\ direction) \times (maximum\ value\ of\ high\ temperature\ sealing\ strength\ in\ TD\ direction)}$$

Lithium Secondary Battery

A lithium secondary battery according to the present disclosure comprises the battery body and the pouch film for a secondary battery exterior, and the battery body is sealed by the pouch film for a secondary battery exterior.

The battery body may comprise a negative electrode for a lithium secondary battery, a positive electrode for a lithium secondary battery, and an electrolyte.

The positive electrode for a lithium secondary battery may be used without limitation as long as the positive electrode is commonly used as a positive electrode for a lithium secondary battery. For example, the positive electrode for a lithium secondary battery may comprise positive electrode active materials such as $LiCoO_2$, $LiMnO_2$, $LiFeO_2$, and $Li(Ni_{0.6}Mn_{0.2}Co_{0.2})O_2$.

The electrolyte may comprise a lithium salt and a non-aqueous organic solvent. Here, the lithium salt and the non-aqueous organic solvent may be used without limitation as long as the lithium salt and the non-aqueous organic solvent are those commonly used as an electrolyte and an organic solvent of a lithium secondary battery.

The negative electrode for a lithium secondary battery may be used without limitation as long as the negative electrode is commonly used as a negative electrode for a lithium secondary battery. For example, the negative electrode for a lithium secondary battery may comprise a negative electrode active material such as a carbon-based active material and a silicon-based active material.

The pouch film for a secondary battery exterior may maintain excellent sealing strength even under severe environmental conditions. Thus, the pouch film for a secondary battery exterior may not be damaged even under severe environmental conditions, and the battery body sealed by the pouch film for a secondary battery exterior may be prevented from being exposed to an external environment.

Hereinafter, the present disclosure will be described in more detail through embodiments. However, these embodiments are merely provided to help understanding of the present disclosure, and the scope of the present disclosure is not limited to these embodiments in any sense.

Examples 1 to 4: The pouch film for a secondary battery exterior, comprising an outer layer, a barrier layer, and a sealant layer, which are sequentially laminated

The pouch film for a secondary battery exterior, comprising a laminate as the outer layer in which nylon having a thickness of 25 $\mu$m, PET having a thickness of 12 $\mu$m, and an outer layer adhesive layer having a thickness of 3 $\mu$m are sequentially laminated, an aluminum foil as the barrier layer adhering to the outer layer adhesive layer, and a first sealant layer $EC_1$ obtained by extruding and coating a polypropylene-based resin on the barrier layer and a second sealant layer $CPP_1$ comprising a non-stretched polypropylene film bonded on the first sealant layer $EC_1$ as the sealant layer was manufactured. Here, when the pouch film for a secondary battery exterior is manufactured, the second sealant layer CPP1 having a crystallization calorie (J/g) and a crystallization temperature Tc (°C) described in Table 1 below was used.

In the manufactured pouch film for a secondary battery exterior, the thickness of the barrier layer, the thickness of the first sealant layer $EC_1$, and the thickness of the second sealant layer $CPP_1$ were illustrated in Table 1 below. Here, the first sealant layer $EC_1$ and the second sealant layer $CPP_1$ which satisfy the upper yield strength and the glass transition temperature described in Table 1 were used.

[Table 1]

| | | Example 1 | Example 2 | Example 3 | Example 4 |
|---|---|---|---|---|---|
| Outer Layer | | 25 $\mu$m of nylon | | | |
| | | 12 $\mu$m of PET | | | |
| | | 3 $\mu$m of adhesive layer | | | |
| Barrier Layer | | 60 $\mu$m of aluminum foil | 60 $\mu$m of aluminum foil | 80 $\mu$m of aluminum foil | 40 $\mu$m of aluminum foil |
| Sealant Layer | | 30 $\mu$m of first sealant layer $EC_1$ | | | |
| | | 70 $\mu$m of second sealant layer $CPP_1$ | 50 $\mu$m of second sealant layer $CPP_1$ | | |
| Crystallization calorie (J/g) | | 16.0 | 14.2 | 15.9 | 16.8 |
| Crystallization temperature (°C) | | 101.2 | 102.4 | 101.1 | 101.7 |
| Glass transition temperature | | -22.5 °C | -21.58 °C | -22.1 °C | -21.45 °C |
| Upper yield strength | MD direction | 18.44 N/mm$^2$ | 18.69 N/mm$^2$ | 18.44 N/mm$^2$ | 18.54 N/mm$^2$ |
| | TD direction | 17.54 N/mm$^2$ | 17.42 N/mm$^2$ | 17.34 N/mm$^2$ | 17.54 N/mm$^2$ |

In Table 1, a method of measuring the glass transition temperature and the upper yield strength of the sealant layer is as follows.

Method of measuring glass transition temperature of sealant layer

After the sealant layer was peeled off from the barrier layer of the pouch film for a secondary battery exterior, a sealant layer specimen having a dimension of 15 mm × 100 mm was manufactured using the peeled sealant layer.
Thereafter, a heating rate was measured as 10 °C/min and a cooling rate was measured as -20 °C/min in a temperature range of -50°C to 0°C using DSC (DSC250 manufactured by TA) and the glass transition temperature of the sealant layer was calculated through an analysis program TRIOS.

Method of measuring upper yield strength of sealant layer

After the sealant layer was peeled off from the barrier layer of the pouch film for a secondary battery exterior, a sealant layer specimen having a dimension of 15 mm × 100 mm was manufactured using the peeled sealant layer, and the upper yield strength of the sealant layer was measured while the specimen is pulled in the MD direction and the TD direction at an initial grip gap of 30 mm and a test speed of 50 mm/min using UTM (AGS-X manufactured by SHIMADZU).

Method of measuring crystallization calorie and crystallization temperature of second sealant layer

Measurement was performed using the same measuring device and method as the method of measuring the glass transition temperature.

**Comparative Examples 1 to 4: Pouch film for secondary battery exterior comprising outer layer, barrier layer, and sealant layer that are sequentially laminated**

The pouch film for a secondary battery exterior was manufactured in the same manner as examples 1 to 4 except that a first sealant layer $EC_2$ formed by extrusion-coating a polypropylene-based resin on the barrier layer and a second sealant layer $CPP_2$ comprising an unstretched polypropylene film laminated on the first sealant layer $EC_2$ were used as the sealant layer instead of the first sealant layer $EC_1$ and the second sealant layer $CPP_1$. However, when the pouch film for a secondary battery exterior according to comparative examples 1 to 4 was manufactured, the second sealant layer $CPP_1$ having a crystallization calorie (J/g) and a crystallization temperature Tc (°C) described in Table 2 below was used.

In the manufactured pouch film for a secondary battery exterior, the thickness of the barrier layer, the thickness of the first sealant layer $EC_2$, and the thickness of the second sealant layer $CPP_2$ were illustrated in Table 2 below. Here, the first sealant layer $EC_2$ and the second sealant layer $CPP_2$ which satisfy the upper yield strength and the glass transition temperature described in Table 2 were used.

Meanwhile, in Table 2 below, the upper yield strength of the sealant layer in the MD direction, the upper yield strength of the sealant layer in the TD direction, and the glass transition temperature were measured in the same method as the upper yield strength of the sealant layer in the MD direction, the upper yield strength of the sealant layer in the TD direction, and the glass transition temperature, which was described above.

[Table 2]

| | | Comparative example 1 | Comparative example 2 | Comparative example 3 | Comparative example 4 |
|---|---|---|---|---|---|
| Outer Layer | | 25 μm of nylon | | | |
| | | 12 μm of PET | | | |
| | | 3 μm of adhesive layer | | | |
| Barrier Layer | | 60 μm of aluminum foil | 60 μm of aluminum foil | 80 μm of aluminum foil | 40 μm of aluminum foil |
| Sealant Layer | | 30 μm of first sealant layer $EC_2$ | | | |
| | | 70 μm of second sealant layer $CPP_2$ | 50 μm of second sealant layer $CPP_2$ | | |
| Crystallization calorie (J/g) | | 19.8 | 21.4 | 19.2 | 20.1 |
| Crystallization temperature (°C) | | 105.6 | 108.1 | 105.5 | 107.6 |
| Glass transition temperature | | -14.23 °C | -13.41 °C | -14.52 °C | -14.37 °C |
| Upper yield strength | MD direction | 18.71 N/mm$^2$ | 19.22 N/mm$^2$ | 19.24 N/mm$^2$ | 19.36 N/mm$^2$ |
| | TD direction | 17.46 N/mm$^2$ | 17.31 N/mm$^2$ | 18.47 N/mm$^2$ | 18.29 N/mm$^2$ |

**Comparative Examples 5 and 6: Pouch film for secondary battery exterior comprising outer layer, barrier layer, and sealant layer that are sequentially laminated**

The pouch film for a secondary battery exterior was manufactured in the same manner as examples 2 and 4 except that a first sealant layer $EC_3$ formed by extrusion-coating a polypropylene-based resin on the barrier layer and a second sealant layer $CPP_3$ comprising an unstretched polypropylene film laminated on the first sealant layer $EC_3$ were used as the sealant layer instead of the first sealant layer $EC_1$ and the second sealant layer $CPP_1$. However, when the pouch film for a secondary battery exterior according to comparative examples 5 and 6 was manufactured, the second sealant layer $CPP_1$ having a crystallization calorie (J/g) and a crystallization temperature Tc (°C) described in Table 3 below was used.

In the manufactured pouch film for a secondary battery exterior, the thickness of the barrier layer, the thickness of the first sealant layer $EC_3$, and the thickness of the second sealant layer $CPP_3$ were illustrated in Table 3 below. Here, the first sealant layer $EC_3$ and the second sealant layer $CPP_3$ which satisfy the upper yield strength and the glass transition temperature described in Table 3 were used.

Meanwhile, in Table 3 below, the upper yield strength of the sealant layer in the MD direction, the upper yield strength of the sealant layer in the TD direction, and the glass transition temperature were measured in the same method as the upper yield strength of the sealant layer in the MD direction, the upper yield strength of the sealant layer in the TD direction, and the glass transition temperature, which was described above.

[Table 3]

| | | Comparative example 5 | Comparative example 6 |
|---|---|---|---|
| Outer Layer | | 25 $\mu$m of nylon | |
| Outer Layer | | 12 $\mu$m of PET | |
| Outer Layer | | 3 $\mu$m of adhesive layer | |
| Barrier Layer | | 60 $\mu$m of aluminum foil | 40 $\mu$m of aluminum foil |
| Sealant Layer | | 30 $\mu$m of first sealant layer $EC_3$ | |
| Sealant Layer | | 50 $\mu$m of second sealant layer $CPP_3$ | |
| Crystallization calorie (J/g) | | 23.4 | 24.8 |
| Crystallization temperature (°C) | | 110.1 | 113.1 |
| Glass transition temperature | | -8.68 °C | -8.29 °C |
| Upper yield strength | MD direction | 21.91 N/mm$^2$ | 21.62 N/mm$^2$ |
| Upper yield strength | TD direction | 20.19 N/mm$^2$ | 20.48 N/mm$^2$ |

## Experimental example 1: Evaluation of sealing strength characteristics of pouch film for secondary battery exterior

The pouch film for a secondary battery exterior according to Examples 1 to 4 and Comparative examples 1 to 6 was measured under the measurement condition "A" described with reference to FIG. 1 and the measurement condition "B" described with reference to FIG. 2. Thus, the graph $G_1$ of dependence of the jig gap change of the room-temperature sealing strength in the MD direction, the graph $G_2$ of dependence of the jig gap change of the room-temperature sealing strength in the TD direction, the graph $G_1$' of dependence of the jig gap change of the high-temperature sealing strength in the MD direction, and the graph $G_2$' of dependence of the jig gap change of the high-temperature sealing strength in the TD direction were obtained. Further, the results measured from the graphs $G_1$, $G_2$, $G_1$', and $G_2$ were illustrated in Table 4 below.

[Table 4]

| | Maximum value of room-temperature sealing strength [N] | | Maximum value of high-temperature sealing strength [N] | | Maximum stroke in TD direction [mm] | | Sealing energy in TD direction [N·mm] | | Parameter P |
|---|---|---|---|---|---|---|---|---|---|
| Example 1 | MD direction | 201 | MD direction | 180 | Room temperature | 22.66 | Room temperature | 3080 | 1.34 |
| Example 1 | TD direction | 210 | TD direction | 175 | High temperature | 22.15 | High temperature | 2690 | 1.34 |

(continued)

| | Maximum value of room-temperature sealing strength [N] | | Maximum value of high-temperature sealing strength [N] | | Maximum stroke in TD direction [mm] | | Sealing energy in TD direction [N·mm] | | Parameter P |
|---|---|---|---|---|---|---|---|---|---|
| Example 2 | MD direction | 201 | MD direction | 172 | Room temperature | 29.71 | Room temperature | 3140 | 1.4693 |
| Example 2 | TD direction | 215 | TD direction | 171 | High temperature | 23.73 | High temperature | 2740 | 1.4693 |
| Example 3 | MD direction | 237 | MD direction | 190 | Room temperature | 13.68 | Room temperature | 3210 | 1.43119 |
| Example 3 | TD direction | 218 | TD direction | 190 | High temperature | 15.42 | High temperature | 2870 | 1.43119 |
| Example 4 | MD direction | 175 | MD direction | 154 | Room temperature | 19.12 | Room temperature | 2410 | 1.28788 |
| Example 4 | TD direction | 170 | TD direction | 150 | High temperature | 19.91 | High temperature | 2310 | 1.28788 |
| Comparative example 1 | MD direction | 201.3 | MD direction | 156.9 | Room temperature | 21.6 | Room temperature | 2940 | 1.76511 |
| Comparative example 1 | TD direction | 196.6 | TD direction | 142.9 | High temperature | 18.14 | High temperature | 2340 | 1.76511 |
| Comparative example 2 | MD direction | 174.3 | MD direction | 145.6 | Room temper ature | 18.73 | Room temper ature | 2760 | 1.38163 |
| Comparative example 2 | TD direction | 187.2 | TD direction | 162.2 | High temperature | 23.88 | High temperature | 2300 | 1.38163 |
| Comparative example 3 | MD direction | 190 | MD direction | 170.5 | Room temperature | 8.71 | Room temperature | 2910 | 1.29039 |
| Comparative example 3 | TD direction | 195 | TD direction | 168.4 | High temperature | 6.57 | High temperature | 2100 | 1.29039 |
| Comparative example 4 | MD direction | 155.4 | MD direction | 116.3 | Room temperature | 24.9 | Room temperature | 2310 | 1.70368 |
| Comparative example 4 | TD direction | 151.6 | TD direction | 188.9 | High temperature | 23.55 | High temperature | 1780 | 1.70368 |
| Comparative example 5 | MD direction | 129.6 | MD direction | 101.7 | Room temperature | 5.03 | Room temperature | 1440 | 1.91747 |
| Comparative example 5 | TD direction | 128.5 | TD direction | 85.4 | High temperature | 13.84 | High temperature | 1210 | 1.91747 |
| Comparative example 6 | MD direction | 124.6 | MD direction | 90.2 | Room temperature | 4.27 | Room temperature | 1330 | 2.12239 |
| Comparative example 6 | TD direction | 99.1 | TD direction | 64.5 | High temperature | 8.35 | High temperature | 1060 | 2.12239 |

The results listed in Table 4 were measured in the following manner.

Maximum value of room-temperature sealing strength

- MD Direction: Measurement of maximum value of graph $G_1$ of dependence of jig gap change of room-temperature sealing strength in MD direction

- TD Direction: Measurement of maximum value of graph $G_2$ of dependence of jig gap change of room-temperature sealing strength in TD direction

Maximum value of high-temperature sealing strength

- MD Direction: Measurement of maximum value of graph $G_1'$ of dependence of jig gap change of high-temperature sealing strength in MD direction
- TD Direction: Measurement of maximum value of graph $G_2'$ of dependence of jig gap change of high-temperature sealing strength in TD direction

Maximum stroke in TD direction

- Room temperature: Measurement of jig gap change corresponding to maximum value of graph $G_2$ of dependence of jig gap change of room-temperature sealing strength in TD direction
- High temperature: Measurement of jig gap change corresponding to maximum value of graph $G_2'$ of dependence of jig gap change of high-temperature sealing strength in TD direction

Sealing energy in TD direction

- Room temperature: Measurement of integral value obtained by integrating graph $G_2$ of dependence of jig gap change of room-temperature sealing strength in TD direction in range of 0 mm to room-temperature maximum stroke in TD direction
- High temperature: Measurement of integral value obtained by integrating graph $G_2'$ of dependence of jig gap change of high-temperature sealing strength in TD direction in range of 0 mm to high-temperature maximum stroke in TD direction

Parameter P

Measured by Equation 1

[Equation 1]

$$P = \frac{(maximum\ value\ of\ room\ temperature\ sealing\ strength\ in\ MD\ direction) \times (maximum\ value\ of\ room\ temperature\ sealing\ strength\ in\ TD\ direction)}{(maximum\ value\ of\ high\ temperature\ sealing\ strength\ in\ MD\ direction) \times (maximum\ value\ of\ high\ temperature\ sealing\ strength\ in\ TD\ direction)}$$

Referring to Table 4, it may be identified that the pouch film for a secondary battery exterior according to examples 1 to 4 entirely has excellent sealing strength characteristics compared to the pouch film for a secondary battery exterior according to comparative examples 1 to 6.

In detail, when example 1 and comparative example 1, which are identical in terms of types of the outer layer and the barrier layer, thicknesses of the outer layer and the barrier layer (the thickness of the outer layer: 40 μm and the thickness of the barrier layer: 60 μm), and a thickness of the sealant layer (the thickness of the first sealant layer: 30 μm and the thickness of the second sealant layer: 70 μm), are compared with each other, it may be seen that the pouch film for a secondary battery exterior according to example 1 entirely exhibits excellent sealing strength characteristics compared to the pouch film for a secondary battery exterior according to comparative example 1. This is because the pouch film for a secondary battery exterior according to example 1 has excellent thermal bonding strength derived from the sealant layer satisfying the glass transition temperature and the upper yield strength under specific conditions.

Likewise, when example 2 and comparative examples 2 and 5, which are identical in terms of the types of the outer layer and the barrier layer, the thicknesses of the outer layer and the barrier layer (the thickness of the outer layer: 40 μm and the thickness of the barrier layer: 60 μm), and the thickness of the sealant layer (the thickness of the first sealant layer: 30 μm and the thickness of the second sealant layer: 70 μm), are compared with each other, it may be seen that the pouch film for a secondary battery exterior according to example 2 entirely exhibits excellent sealing strength characteristics compared to the pouch film for a secondary battery exterior according to comparative examples 2 and 5. This is because the pouch film for a secondary battery exterior according to example 2 has excellent thermal bonding strength derived from the sealant layer satisfying the glass transition temperature and the upper yield strength under specific conditions.

Further, it may be identified that, when compared with the pouch film for a secondary battery exterior according to example 2 (the thickness of the barrier layer: 60 $\mu$m), the pouch film for a secondary battery exterior according to example 3 in which a thicker barrier layer is used (the thickness of the barrier layer: 80 $\mu$m) entirely has further improved sealing strength characteristics. This is because an improvement in mechanical strength of the pouch film for a secondary battery exterior resulting from an increase in the thickness of the barrier layer affects sealing strength characteristics.

Meanwhile, it may be identified that, when compared with the pouch film for a secondary battery exterior according to comparative example 2 (the thickness of the barrier layer: 60 $\mu$m), the pouch film for a secondary battery exterior according to comparative example 3 (the thickness of the barrier layer: 80 $\mu$m) entirely exhibits further improved sealing strength characteristics.

Here, when example 3 and comparative example 3, which are identical in terms of the types of the outer layer and the barrier layer, the thicknesses of the outer layer and the barrier layer (the thickness of the outer layer: 40 $\mu$m and the thickness of the barrier layer: 80 $\mu$m), and the thickness of the sealant layer (the thickness of the first sealant layer: 30 $\mu$m and the thickness of the second sealant layer: 50 $\mu$m), are compared with each other, it may be identified that the pouch film for a secondary battery exterior according to example 3 entirely exhibits excellent sealing strength characteristics compared to the pouch film for a secondary battery exterior according to comparative example 3. This is because the pouch film for a secondary battery exterior according to example 3 has excellent thermal bonding strength derived from the sealant layer satisfying the glass transition temperature and the upper yield strength under specific conditions.

Further, when example 4 and comparative examples 4 and 6, which are identical in terms of the types of the outer layer and the barrier layer, the thicknesses of the outer layer and the barrier layer (the thickness of the outer layer: 40 $\mu$m and the thickness of the barrier layer: 40 $\mu$m), and the thickness of the sealant layer (the thickness of the first sealant layer: 30 $\mu$m and the thickness of the second sealant layer: 50 $\mu$m), are compared with each other, it may be seen that the pouch film for a secondary battery exterior according to example 4 entirely exhibits excellent sealing strength characteristics compared to the pouch film for a secondary battery exterior according to comparative examples 4 and 6. This is because the pouch film for a secondary battery exterior according to example 4 has excellent thermal bonding strength derived from the sealant layer satisfying the glass transition temperature and the upper yield strength under specific conditions.

## Experimental example 2: Leakage test of pouch film for secondary battery exterior

A simple lithium secondary battery sample pack (a width: 200 mm, a length: 110 mm, and a height: 6 mm) was manufactured using the pouch film for a secondary battery exterior according to examples 1 to 4 and the comparative examples 1 to 6. After the sample pack was disposed between the two jigs, the sample pack was left under a condition of 100 °C for 90 days in a state in which a distance between the two jigs in a vertical direction was fixed to 6 mm, and then the leakage was evaluated and illustrated in Table 5.

[Table 5]

|  | Leak test results [Number of leaks/total number] |
|---|---|
| Example 1 | 0/20 |
| Example 2 | 0/20 |
| Example 3 | 0/20 |
| Example 4 | 0/20 |
| Comparative example 1 | 0/20 |
| Comparative example 2 | 1/20 |
| Comparative example 3 | 1/20 |
| Comparative example 4 | 2/20 |
| Comparative example 5 | 16/20 |
| Comparative example 6 | 10/20 |

Referring to Table 5, it was identified that no leakage occurred in the lithium secondary battery sample pack manufactured using the pouch film for a secondary battery exterior according to the examples, but leakage generally occurred in the lithium secondary battery sample pack manufactured using the pouch film for a secondary battery exterior according to the comparative examples, and particularly, a large number of leakage occurred in the lithium secondary battery sample pack manufactured using the pouch film for a secondary battery exterior according to the comparative examples 5 and 6. From this, it may be seen that the pouch film for a secondary battery exterior according to the examples has very excellent long-term reliability, and thus, when applied to the lithium secondary battery, exhibit very excellent sealing properties and retention characteristics.

Acknowledgement

The present disclosure is a result obtained through support of the following project.

Project unique number: 1415185612
Project Number: 20022450
Ministry Name: Ministry of Trade, Industry and Energy
Project management (professional) agency name: Korea Planning & Evaluation Institute of Industrial Technology
Research program name: material and component package-type (leading company)
Research project name: development of next-Generation secondary battery pouch capable of implementing high adhesion strength (60 °C) two or more times
Contribution rate: 1/1
Project implementation organization name: Yulchon Chemical Co., Ltd.
Research period: January 1, 2023 to December 31, 2023

**Claims**

1.  A pouch film for a secondary battery exterior, the pouch film comprising an outer layer, a barrier layer, and a sealant layer that are sequentially laminated,

    wherein the sealant layer comprises a polyolefin-based resin,
    wherein an upper yield strength of the sealant layer in an MD direction is in a range of 17.50 N/mm$^2$ to 19.99 N/mm$^2$, and an upper yield strength thereof in a TD direction is in a range of 16.50 N/mm$^2$ to 18.99 N/mm$^2$, and
    wherein a glass transition temperature of the sealant layer is in a range of -30.00°C to -20.00°C.

2.  The pouch film of claim 1, wherein the sealant layer comprises a first sealant layer comprising the polyolefin-based resin and a second sealant layer comprising a polypropylene-based resin, which are sequentially arranged in a direction away from the barrier layer.

3.  The pouch film of claim 2, wherein a ratio of a thickness of the second sealant layer to a sum of a thickness of the first sealant layer and the thickness of the second sealant layer is in a range of 1:05 to 1:0.99.

4.  The pouch film of claim 2, wherein the first sealant layer comprises a polyolefin derived from an olefin or a derivative thereof, a copolymer thereof, or a blend comprising at least one of them.

5.  The pouch film of claim 4, wherein the first sealant layer comprises at least one selected from the group consisting of polyethylene, polypropylene, polybutylene, a copolymer thereof, and a blend thereof.

6.  The pouch film of claim 2, wherein the second sealant layer comprises at least one selected from the group consisting of a polypropylene homopolymer, a polypropylene copolymer, and a blend thereof.

7.  The pouch film of claim 2, wherein the second sealant layer comprises a cast polypropylene (CPP) film.

8.  The pouch film of claim 1, wherein the barrier layer comprises at least one selected from the group consisting of aluminum, stainless steel, copper, titanium, and an alloy thereof.

9.  The pouch film of claim 1, wherein a thickness of the barrier layer is in a range of 20 $\mu$m to 150 $\mu$m.

10. The pouch film of claim 1, wherein the outer layer comprises at least one selected from the group consisting of polyamide, polyester, polyolefin, a copolymer thereof, and a blend thereof.

11. The pouch film of claim 1, wherein a maximum value of room-temperature sealing strength of the pouch film for a secondary battery exterior in the MD direction measured according to a measurement condition "A" is in a range of 165 N to 240 N, and a maximum value of room-temperature sealing strength thereof in the TD direction measured according to the measurement condition "A" is in a range of 160 N to 230 N,
[Measurement condition A]

(1) Manufacturing of specimen $A_0$
a specimen $A_0$ having a length of 100 mm in the TD direction and a length 200 mm in the MD direction is manufactured from the pouch film for a secondary battery exterior,
(2) Thermal bonding and manufacturing of specimens $A_1$ and $A_2$

after the specimen $A_0$ is folded in half so that the length in the MD direction is halved, the sealant layers in contact with each other are thermally bonded (at a temperature of 220 °C, a pressure of 0.2 MPa, a time of 2.0 seconds, and a length of 10 mm of a sealing portion in the MD direction), the thermally bonded specimen $A_0$ is cut, and thus a specimen $A_1$ having a length of 15 mm in the TD direction is manufactured, and
separately from the manufacturing of the specimen $A_1$, after the specimen $A_0$ is folded in half so that the length in the TD direction is halved, the sealant layers in contact with each other are thermally bonded (at a temperature of 220 °C, a pressure of 0.2 MPa, a time of 2.0 seconds, and a length of 10 mm of a sealing portion in the TD direction), the thermally bonded specimen $A_0$ is cut, and thus a specimen $A_2$ having a length of 15 mm in the MD direction is manufactured, and

(3) Measurement of room-temperature sealing strength and maximum value thereof

a graph $G_1$ of dependence of a jig gap change of the room-temperature sealing strength in the MD direction is obtained while the specimen $A_1$ is pulled at a measurement temperature of 25 °C and a measurement speed of 50 mm/min after the specimen $A_1$ is fixed between two jigs of a tensile testing machine UTM (with an initial jig gap of 30) mm so that the sealing portion of the specimen $A_1$ is positioned at a center, and a maximum value of the room-temperature sealing strength in the MD direction is measured from a maximum value of the graph $G_1$, and
a graph G2 of dependence of a jig gap change of the room-temperature sealing strength in the TD direction is obtained while the specimen $A_2$ is pulled at a measurement temperature of 25 °C and a measurement speed of 50 mm/min after the specimen $A_2$ is fixed between the two jigs of the tensile testing machine UTM (with an initial jig gap of 30 mm) so that the sealing portion of the specimen $A_2$ is positioned at a center, and a maximum value of the room-temperature sealing strength in the TD direction is measured from a maximum value of the graph $G_2$.

12. The pouch film of claim 11, wherein, in the graph $G_2$, a room-temperature maximum stroke in the TD direction defined as the jig gap change corresponding to the maximum value of the room-temperature sealing strength in the TD direction is in a range of 13 mm to 30mm.

13. The pouch film of claim 12, wherein an integral value obtained by integrating the graph $G_2$ in a range of 0 mm to the room-temperature maximum stroke in the TD direction is in a range of 2,200 N·mm to 3,500 N·mm.

14. The pouch film of claim 11, wherein the maximum value of the room-temperature sealing strength in the TD direction is in a range of 90% to 110% of the maximum value of the room-temperature sealing strength in the MD direction.

15. The pouch film of claim 11, wherein a maximum value of high-temperature sealing strength of the pouch film for a secondary battery exterior in the MD direction measured according to a measurement condition "B" is in a range of 150 N to 200 N, and a maximum value of high-temperature sealing strength thereof in the TD direction measured according to the measurement condition "B" is in a range of 145 N to 195 N,
[Measurement condition B]

(1) Manufacturing of specimen $B_0$
a specimen $B_0$ having a length of 100 mm in the TD direction and a length of 200 mm in the MD direction is manufactured from the pouch film for a secondary battery exterior,
(2) Thermal bonding and manufacturing of specimens $B_1$ and $B_2$

after the specimen $B_0$ is folded in half so that a length thereof in the MD direction is halved, the sealant layers in contact with each other are thermally bonded (at a temperature of 220 °C, a pressure of 0.2 MPa, a time of 2.0 seconds, and a length of 10 mm of a sealing portion in the MD direction), the thermally bonded specimen $B_0$ is cut, and thus a specimen $B_1$ having a length of 15 mm in the TD direction is manufactured, and separately from the manufacturing of the specimen $B_1$, after the specimen $B_0$ is folded in half so that the length in the TD direction is halved, the sealant layers in contact with each other are thermally bonded (at a temperature of 220 °C, a pressure of 0.2 MPa, a time of 2.0 seconds, and a length of 10 mm of a sealing portion in the TD direction), the thermally bonded specimen $B_0$ is cut, and thus a specimen $B_2$ having a length of 15 mm in the MD direction is manufactured,

(3) High-temperature leaving

the specimen $B_1$ is left at 60°C for 3 minutes, and
the specimen $B_2$ is left at 60°C for 3 minutes, and

(4) Measurement of high-temperature sealing strength and maximum value thereof

a graph $G_1$' of dependence of a jig gap change of the high-temperature sealing strength in the MD direction is obtained while the specimen $B_1$ is pulled at a measurement temperature of 25 °C and a measurement speed of 50 mm/min after the specimen $B_1$ is fixed between two jigs of the tensile testing machine UTM (with an initial jig gap of 30 mm) so that the sealing portion of the specimen $B_1$ is positioned at a center, and the maximum value of the high-temperature sealing strength in the MD direction is measured from a maximum value of the graph $G_1$', and
a graph $G_2$' of dependence of a jig gap change of the high-temperature sealing strength in the TD direction is obtained while the specimen $B_2$ is pulled at a measurement temperature of 25 °C and a measurement speed of 50 mm/min after the specimen $B_2$ is fixed between two jigs of the tensile testing machine UTM (with an initial jig gap of 30 mm) so that the sealing portion of the specimen $B_2$ is positioned at a center, and the maximum value of the high-temperature sealing strength in the TD direction is measured from a maximum value of the graph $G_2$'.

16. The pouch film of claim 15, wherein, in the graph $G_2$', a high-temperature maximum stroke in the TD direction defined as the jig gap change corresponding to the maximum value of the high-temperature sealing strength in the TD direction is in a range of 15 mm to 25mm.

17. The pouch film of claim 16, wherein an integral value obtained by integrating the graph $G_2$' in a range of 0 mm to the high-temperature maximum stroke in the TD direction is in a range of 2,200 N·mm to 3,500 N·mm.

18. The pouch film of claim 15, wherein the maximum value of the high-temperature sealing strength in the TD direction is in a range of 95% to 105% of the maximum value of the high-temperature sealing strength in the MD direction.

19. The pouch film of claim 15, wherein a parameter "P" related to a sealing strength reduction rate at a high temperature compared to a room temperature, which is represented by Equation 1, is 1.5 or less,

[Equation 1]

$$P = \frac{(maximum\ value\ of\ room\ temperature\ sealing\ strength\ in\ MD\ direction) \times (maximum\ value\ of\ room\ temperature\ sealing\ strength\ in\ TD\ direction)}{(maximum\ value\ of\ high\ temperature\ sealing\ strength\ in\ MD\ direction) \times (maximum\ value\ of\ high\ temperature\ sealing\ strength\ in\ TD\ direction)}$$

20. A lithium secondary battery encapsulated with the pouch film for a secondary battery exterior of any one of claims 1 to 19.

Figure 1

Figure 2

## INTERNATIONAL SEARCH REPORT

| International application No. |
|---|
| **PCT/KR2024/011613** |

**A. CLASSIFICATION OF SUBJECT MATTER**

**H01M 50/131**(2021.01)i; **H01M 50/105**(2021.01)i; **H01M 50/126**(2021.01)i; **H01M 50/116**(2021.01)i;
**H01M 10/052**(2010.01)i

According to International Patent Classification (IPC) or to both national classification and IPC

**B. FIELDS SEARCHED**

Minimum documentation searched (classification system followed by classification symbols)

H01M 50/131(2021.01); B32B 27/32(2006.01); H01M 2/02(2006.01); H01M 50/10(2021.01); H01M 50/116(2021.01);
H01M 50/124(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실란트층(sealant layer), 폴리올레핀계 수지(polyolefin-based resin), 상항복강도
(upper yield strength), 유리전이온도(glass transition temperature), 상온 실링 강도(room temperature sealing
strength), 상온 최대 스트로크(room temperature maximum stroke)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0047904 A (LG ENERGY SOLUTION, LTD.) 10 April 2023 (2023-04-10)<br>See paragraphs [0057]-[0107] and claims 1-14. | 1-10,20 |
| Y | | 11,14-15 |
| A | | 12-13,16-19 |
| Y | KR 10-2023-0097597 A (LG ENERGY SOLUTION, LTD.) 03 July 2023 (2023-07-03)<br>See claims 1-3. | 11,14-15 |
| A | JP 2023-083246 A (TORAY IND. INC.) 15 June 2023 (2023-06-15)<br>See paragraphs [0008]-[0062]. | 1-20 |
| A | KR 10-2018-0020082 A (SHOWA DENKO PACKAGING CO., LTD.) 27 February 2018 (2018-02-27)<br>See paragraphs [0014]-[0029] and claims 1-6. | 1-20 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2024** | **06 November 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/011613**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-1519742 B1 (YOULCHON CHEMICAL CO., LTD.) 12 May 2015 (2015-05-12) See paragraphs [0027]-[0028] and claim 1. | 1-20 |

Form PCT/ISA/210 (second sheet) (July 2022)

## INTERNATIONAL SEARCH REPORT
### Information on patent family members

International application No.

**PCT/KR2024/011613**

| Patent document cited in search report | | | Publication date (day/month/year) | Patent family member(s) | | | Publication date (day/month/year) |
|---|---|---|---|---|---|---|---|
| KR | 10-2023-0047904 | A | 10 April 2023 | CA | 3221913 | A1 | 06 April 2023 |
| | | | | CN | 117426004 | A | 19 January 2024 |
| | | | | EP | 4343932 | A1 | 27 March 2024 |
| | | | | JP | 2024-517488 | A | 22 April 2024 |
| | | | | KR | 10-2660400 | B1 | 25 April 2024 |
| | | | | US | 2024-0266645 | A1 | 08 August 2024 |
| | | | | WO | 2023-055069 | A1 | 06 April 2023 |
| KR | 10-2023-0097597 | A | 03 July 2023 | CN | 118435429 | A | 02 August 2024 |
| | | | | WO | 2023-121364 | A1 | 29 June 2023 |
| JP | 2023-083246 | A | 15 June 2023 | | None | | |
| KR | 10-2018-0020082 | A | 27 February 2018 | CN | 107768553 | A | 06 March 2018 |
| | | | | CN | 107768553 | B | 16 November 2021 |
| | | | | CN | 113629326 | A | 09 November 2021 |
| | | | | CN | 113629326 | B | 11 July 2023 |
| | | | | JP | 2018-032616 | A | 01 March 2018 |
| | | | | JP | 2021-192377 | A | 16 December 2021 |
| | | | | JP | 2024-016165 | A | 06 February 2024 |
| | | | | JP | 6969892 | B2 | 24 November 2021 |
| | | | | JP | 7381528 | B2 | 15 November 2023 |
| | | | | KR | 10-2021-0100582 | A | 17 August 2021 |
| | | | | KR | 10-2022-0088403 | A | 27 June 2022 |
| | | | | KR | 10-2399127 | B1 | 18 May 2022 |
| | | | | KR | 10-2411295 | B1 | 22 June 2022 |
| | | | | KR | 10-2669314 | B1 | 27 May 2024 |
| | | | | TW | 201807862 | A | 01 March 2018 |
| | | | | TW | I759313 | B | 01 April 2022 |
| KR | 10-1519742 | B1 | 12 May 2015 | | None | | |

Form PCT/ISA/210 (patent family annex) (July 2022)

**EP 4 760 895 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230104133